# EUROPÄISCHE PATENTANMELDUNG

(11) **EP 0 963 862 A2**
(43) Veröffentlichungstag der Anmeldung: **15.12.1999**
(21) Anmeldenummer: 99109029.1
(22) Anmeldetag: 07.05.1999
(51) Int. Cl.: B60B 21/02

(54) **Rad/Reifensystem mit einer Felge mit Felgenhorn und mit einem Wulst ausgestatteten Reifen**

(30) Priorität: 12.06.1998 DE 19826064
(71) Anmelder: Continental Aktiengesellschaft, 30165 Hannover (DE)
(72) Erfinder: Wedemeyer, Lutz, 31515 Wunstorf (DE); Sergel, Horst, 30657 Hannover (DE); Doering, Werner, 30823 Garbsen (DE); Hesse, Heiko, 30900 Wedemark (DE)

(57) **Zusammenfassung**

Rad/Reifensystem mit einer Felge (1) mit Felgenhorn und mit einem mit Wulst ausgestatteten Reifen, bei dem das Felgenhorn zur Aufnahme des Wulstes einen mit einer ringförmigen Öffnung (Fuge) versehenen ringförmigen Hohlraum bildet,
bei dem ein Klemmring (11) zum axialen Festklemmen des Wulstes (7) gegen eine axiale Stützfläche im Hohlraum aus einer Klemmposition zum Klemmen des Wulstes in eine Freigabeposition zum Lösen der Klemmung bzw aus seiner Freigabeposition in die Klemmposition axial bewegbar angeordnet ist, wobei der Klemmring (12) mit einer Lagerfläche ausgebildet ist, mit der er in der Klemmposition auf einer zur Lagerfläche des Klemmrings korrespondierend ausgebildeten Lagerfläche der Felge (1) verschiebbar gelagert ist, und
bei dem die Felge und der Klemmring mit im Bereich ihrer Lagerflächen in ihrer Klemmposition zu einander korrespondierend ausgebildeten Umfangsnuten zur Aufnahme eines gemeinsamen Drahtes oder eines Kordes zwischen dem Klemmring (11) und der Felge zur Erzeugung eines axialen Formschlusses zwischen Klemmring (11) und Felge (1) und somit zur axialen Fixierung des Klemmrings auf der Felge in dessen Klemmposition ausgebildet ist.

## Beschreibung

Die Erfindung betrifft ein Rad/Reifensystem mit einer Feige mit Felgenhorn und mit einem mit Wulst ausgestatteten Reifen sowie ein Verfahren zur Befestigung eines Reifens auf einer Felge und ein Verfahren zum Lösen eines Reifens von einer Felge.

Fahrzeugluftreifen werden üblicherweise mit durch Metallkerne verstärkte Wulstbereiche ausgebildet, wobei die zugfesten Kerne den Fahrzeugluftreifen auf der Felge halten. Die Fahrzeugluftreifen werden üblicherweise dadurch auf die Felgen montiert, daß sie mit ihren verstärkten Wülsten auf der radial äußeren Oberfläche der Felgen fest sitzen. Zur Montage und zur Demontage müssen hierzu die Wülste über die zur Sicherung des axialen Sitzes des Fahrzeugluftreifens auf der Felge mit gegenüber den Innendurchmessern der Wülste größerem Außendurchmesser ausgebildeten Felgenhorn gezogen werden. Die Montage und die Montage derartiger Fahrzeugluftreifen ist hierdurch aufwendig.

Aus der DE 3408402 A1 ist es bekannt, bei CTS-Reifen für LKW, bei denen der Fahrzeugluftreifen mit seinem Kernwulst auf einer Sitzfläche auf der radialen Innenseite der Felge befestigt wird, den Wulst mit einem Klemmring zwischen Klemmring und Felgenhorn axial festzuklemmen. Zur Montage und zur Demontage muß der Wulst über ein mit einem gegenüber dem Außendurchmesser des Wulstes kleineren Innendurchmesser ausgebildetes Felgenhorn gezogen werden. Die Montage und die Montage derartiger Fahrzeugluftreifen ist hierdurch sehr aufwendig. Um ein Verrutschen des Klemmrings zu vermeiden, wird auf der dem Wulst in axialer Richtung des Reifens abgewandten Seite ein Sprengring in eine Umfangsnut der Felge montiert, gegen den sich der Klemmring axial abstützt. Die Montage des Sprengrings erfordert jedoch, daß der Wulst zunächst weiter als gewünscht mithilfe des Klemmrings axial zusammengepreßt wird. Nach Montage des Sprengringswird diese starke Preßkraft aufgehoben, sodaß das Wulstgummi den Klemmring an den Sprengring preßt. Neben unnötig hohen Preßkräften, die zur Belastung von Material und zu zusätzlichen Montageschwierigkeiten führen, ist auch das nach der Montage verbleibende axiale Spiel zwischen Sprengring, Klemmkörper, Wulst und Felgenhorn relativ groß und undefiniert. Die Sicherstellung des axialen Sitzes wird hierdurch erschwert. Der Sprengring muß zur Montage in die Position der Umfangsnut bewegt werden zu können auch in radialer Richtung zunächst gedehnt werden. Zum Eintauchen in die Umfangsnut schnappt er entgegen der Dehnungsrichtung zurück. Bei diesen radialen Deformationen des Sprengrings können auch axiale Deformationen auftreten. Die Deformationen des Sprengrings bewirken zusätzliches indefinites Spiel und somit ein erhöhtes Risiko eines unzureichenden Festsitzes des Reifens.

Der Erfindung liegt die Aufgabe zugrunde eine einfache und sichere Montage und/oder Demontage eines Rad/Reifensystems zu ermöglichen.

Die Aufgabe wird erfindungsgemäß durch ein Rad/Reifensystem gemäß den Merkmalen des Anspruchs 1 sowie durch ein Verfahren gemäß den Merkmalen des Anspruchs 7 sowie durch ein Verfahren gemäß den Merkmalen des Anspruchs 9 gelöst.

Der Reifen wird in einfacher Weise derart montiert, daß sein Wulst durch axiales Bewegen des Klemmrings zwischen Klemmring und axialer Stützfläche des Felgenhorns eingeklemmt wird. Die axiale Bewegung des Klemmrings muß lediglich soweit erfolgen, daß die korrespondierend ausgebildeten Umfangsnuten die gleiche axiale Position einnehmen und somit einen gemeinsamen ringförmigen Hohlraum zur Aufnahme des Drahtes zur Fixierung einnehmen. Diese Position entspricht der Klemmposition des Klemmrings auch während des Fahrens mit dem montierten Rad. In dieser Position des Klemmrings wird der Draht in den durch die Umfangsnuten gebildeten Hohlraum eingefügt, hierdurch ein axialer Formschluß zwischen Felge und Klemmring erzeugt und somit der Klemmring und der geklemmte Reifen axial fixiert. Zur Demontage wird zunächst durch einfaches Entfernen des Drahtes der axiale Formschluß und somit die axiale Fixierung des Klemmrings und des Reifens auf der Felge gelöst. Durch axiale Bewegung des Klemmrings wird der Klemmring soweit entfernt, daß der Reifenwulst von der Feige entfernt werden kann.

Die Ausbildung gemäß den Merkmalen von Anspruch 2 ermöglicht ein einfaches, zuverlässiges Einführen und/oder Ausführen des Drahtes in den bzw aus dem durch die korrespondierend ausgebildeten Umfangsnuten gebildeten ringförmigen Hohlraum und somit eine besonders einfache und zuverlässige Montage und/oder Demontage des Fahrzeugrades.
Die Ausbildung gemäß den Merkmalen des Anspruchs 3 ist besonders leicht und leicht herzustellen. Der Wulst läßt sich mit Gummikern über Feigen mit sehr großem Außendurchmesser ziehen (Dies ist z.B. bei Felgen mit Notlaufstütze wichtig.). Der Gummikern ist flexibel, hat geringes Gewicht und verbilligt die Herstellung.

Ein Fahrzeugrad gemäß den Merkmalen von Anspruch 4 erleichtert die Gesamtreifenherstellung, da der aufwendige zusätzliche Produktionsprozeß zur Herstellung, zur Vorbereitung und zur Integration von Kernen entfällt. Darüberhinaus wird auf das üblicherweise gewichtsbringende Kernaufbaumaterial ganz verzichtet, sodaß der Reifen leichter wird.

Bevorzugt weist der Draht eine quadratische, eine runde oder ovale Querschnittskontur gemäß den Merkmalen des Anspruchs 5 auf. Ein kreisrunder Querschnitt ist relativ preiswert und bietet fertigungstechnische Vorteile bei der Herstellung der Ringnut sowie der Bohrung zum Einfädeln des Drahtes. Die Montage und Demontage eines Drahtes mit kreisrundem Querschnitt ist leichter (geringe Reibung!).

Besonders zuverlässig ist die Ausbildung gemäß den Merkmalen von Anspruch 6, da hierdurch die axialen Kräfte sehr gleichmäßig über den Umfang hinweg vom Reifen über den Klemmring und den Draht auf die Feige bei geringer Flächenbelastung übertragen werden.

Die Erfindung wird im folgenden anhand der in den Figuren 1 bis 2 dargestellten Ausführungsbeispiele näher erläutert. Hierin zeigen
- Fig. 1: eine Querschnittsdarstellung eines erfindungsgemäßen Fahrzeugrades mit montiertem Fahrzeugrad,
- Fig. 2: schematische Darstellung zur Erläuterung der Montage und der Demontage.

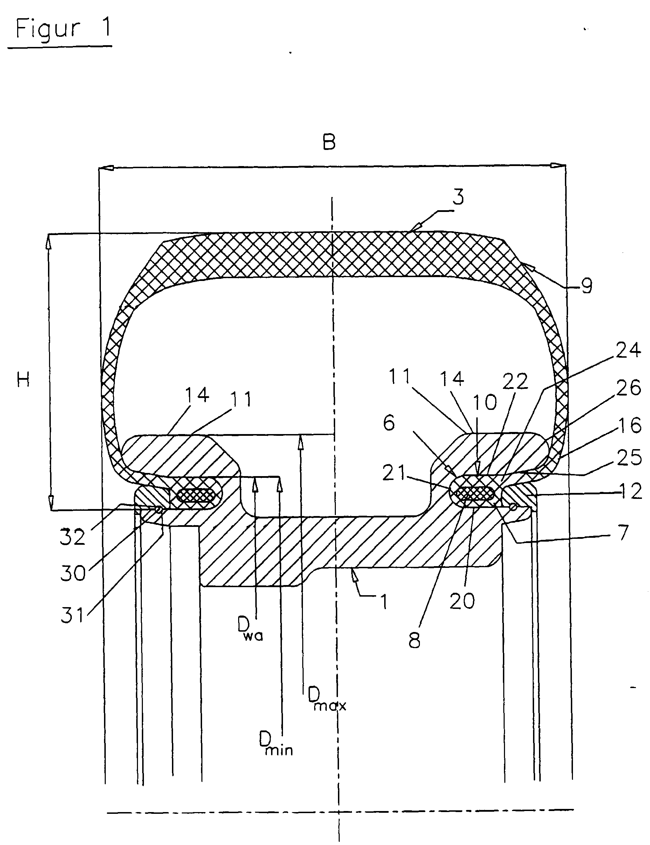

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, Innenschicht auf, über die eine nicht dargestellte Karkasse radialer Bauart mit beispielsweise einer oder zwei Karkassenlagen aufgebaut ist. Im Bereich der Lauffläche ist radial außerhalb der Karkasse ein nicht dargestellter Gürtel bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30 ° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen aus Kautschukmaterial aufgelegt. Im Seitenwandbereich 9 ist Kautschukmaterial auf die Karkasse aufgelegt. Das Seitenwandkautschukmaterial reicht vom Schulterbereich bis zum Wulstbereich 6.

Die einstückig ausgebildete Feige 1 ist an ihren beiden axialen Stirnseiten jeweils mit einer konzentrisch zur Felge angeordneten Ringkammer 10 mit einer radial inneren Ringkammerwand 20, einer axial inneren Ringkammerwand 21 und einer radial äußeren Ringkammerwand 22 einstückig ausgebildet. Axial nach außen zwischen Ringkammerwand 22 und radial innerer Ringkammerwand 20 ist eine ringförmige Durchgangsöffnung 24 von axial außen zur Ringkammer hin ausgebildet. Die Ringkammerwand 22 ist zylindrisch und in ihrem axial äußeren Bereich 25 von axial innen nach axial außen konisch erweitert und geht in die gekrümmte Stirnfläche 26 der Felge über. Auf der radial äußeren Seite der Felge erstreckt sich ein Notlaufsattel 11 mit seiner Notlaufsatteloberfläche 14 nach axial innen über die Position der Ringkammer 10 hinweg. Jede Notlaufsatteloberfläche erstreckt sich soweit nach axial innen, daß der Gürtel in seinen axialen Randzonen von der Schulter jeweils mit 10 bis 30 %, beispielsweise 25%, axial überdeckt ist.

Der Fahrzeugluftreifen 3 umgreift mit seinen unteren Seitenwandbereichen 16 die gekrümmten Bereiche 26. Die Krümmung der Stirnfläche 26 der Felge entspricht der gewünschten Reifenkontur in diesem Bereich.

Am Ende des unteren Seitenwandbereiches 16 ist jeweils der Wulstbereich 6 mit von der Innenseite des Reifens wegweisend ausgebildeter wulstartiger Verdickung 7 ausgebildet. Der Wulst ist mit einem in das Karkassenlagenende eingebetteten elastisch dehnbaren Kern 8 ausgebildet. Im montierten Zustand gemäß Fig. 1 füllt der Wulstbereich 6 unter Formschluß zur axial inneren Ringkammerwand 21, zur radial äußeren Ringkammerwand 22 sowie zur radial inneren Ringkammerwand 20 ca. 1/2 bis 3/4 des Ringkammerraums. Axial außerhalb des Wulstes ist ein Klemmring 12 axial formschlüssig zum Wulstbereich 6 nach axial innen und nach radial innen zur radial inneren Ringkammerwand 20 ausgebildet, der sich in axialer Richtung von dem Wulstbereich 6 zwischen unterer Reifenwand 16 und radial innerer Ringkammerwand 20 durch die Ringöffnung 24 hindurch nach axial außen erstreckt. Der Klemmring 12 ist über den gesamten axialen Erstreckungsbereich der Ringkammer axial außerhalb des Wulstbereichs 6 und somit des Wulstes an seiner radial inneren Mantelfläche zylindrisch und an seiner radial äußeren Mantelfläche parallel zur radial inneren Ringkammerwand 25 konisch erweitert ausgebildet. In der Ausführung von Fig.1 erstreckt sich der Klemmring 12 in axialer Richtung bis hin fast zur axialen Position der Stirnseite 26 des Felgenhorns. In der radial inneren Fläche des Klemmrings ist eine Umfangsnut 32 ausgebildet, zu der korrespondierend eine Umfangsnut 31 in der axialen Verlängerung der Ringkammerwand 20 ausgebildet ist, so daß beide zusammen einen zur Radachse konzentrischen Ringraum bilden. In diesem Ringraum erstreckt sich ein Draht 30 über den gesamten Umfang und bildet eine formschlüssige Verbindung zwischen Klemmring und Felge. Der Wulst steht in der Ausführung gemäß Fig. 1 unter Formschluß nach radial außen, nach radial innen und nach axial innen zu den geschlossenen Ringkammerwänden 22, 20, 21 und durch den axialen Formschluß zum Klemmring 12, der seinerseits in axialem und radialem Formschluß zur geschlossenen Ringkammerwand 20 ausgebildet ist, auch nach axial außen in Formschluß zur Feige. Darüber hinaus steht der untere Seitenwandbereich 16 mit der konisch ausgebildeten axialen Verlängerung 25 der Ringkammerwand 22 und mit der korrespondierend ausgebildeten konischen äußeren Mantelfläche des Klemmrings 12 auch im axialen Erstreckungsbereich der Ringkammer axial außerhalb des Wulstes 6 in vollständigem Berührkontakt.

Der vollständige Formschluß des Wulstes zur Felge sichert den Sitz des Reifens auf der Felge während des Fahrens.

Im Bereich der gekrümmten Stirnfläche 26 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch die Stirnfläche 26 versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der nach axial innen reichende Notlaufsattel 11 erstreckt sich über den gesamten Umfangsbereich des Reifens. Bei plötzlichem Innendruckverlust stützt sich der Reifen mit seinem Laufstreifenbereich auf den beiderseitig vorgesehenen, mit im wesentlichen zylindrischer oder nach axial innen mit leicht konisch erweiterter Oberfläche mit einem Steigungswinkel von 0 bis 10 ° zur Achsrichtung ausgebildeten Notlaufsattel 11 ab. Frühzeitige Zerstörung und Ablösung des Reifens werden vermieden.

Ebenso ist es denkbar, die radial äußere Oberfläche der Notlaufstützflächen mit zusätzlichem Stützmaterial zu belegen. Das zusätzliche Stützmaterial ist aus hartem Kunststoff, Gummi oder Kunststoffschaum ausgebildet, das zur Dämpfung unempfindlich gegen Stöße ist und das gute Gleiteigenschaften für den Notlauf aufweist.

Der Klemmring ist aus Metall ausgebildet.

Der Wulstkern 8 wird in bekannter Weise durch Einbettung des Kerns 8 in die Karkasse durch Umschlag der Karkasse um den Kern von innen nach außen oder von außen nach innen verankert. Die Karkasse ist eng um den Kern 8 gewickelt und der Umschlag ist im Anschluß an den Kern 8 in unmittelbarem Kontakt zum Hauptteil der Karkasse. Zur Ausbildung des Kerns 8 wird ein elastisches Gummimaterial mit einer Shore-A-Härte von 80 bis 95, vorzugsweise 90 - im Ausführungsbeispiel von Figur 1 mit einer Shore-A-Härte von 87 - gewählt, das eine elastische Dehnbarkeit in Umfangsrichtung des Kerns von 5 bis 30%, für Standard-Reifendimensionen von 10 bis 20% aufweist.

Der Kern wird durch Extrusion durch injection moulding oder vergleichsweise bekannte Techniken hergestellt.

Es ist auch denkbar, den Wulst kernlos auszubilden, wobei auch in diesem nichtdargestellten Ausführungsbeispiel das Gummimaterial des Wulstes so gewählt wird, daß der Wulst die genannten Dehnungseigenschaften in Umfangsrichtung aufweist.

Soweit der Abrieb zwischen Stirnfläche 26 und unterer Seitenwand 16 unerwünscht groß wird, ist es möglich, zusätzlich, wie nicht dargestellt ist, zwischen Felgenhorn und Wulst einen zusätzlichen Streifen von abriebfestem Material, beispielsweise von abriebfestem Gummi oder Kunststoff auszubilden. Der abriebfeste Streifen kann bis in die Ringkammer reichen und dort um den Wulst umgeschlagen sein.

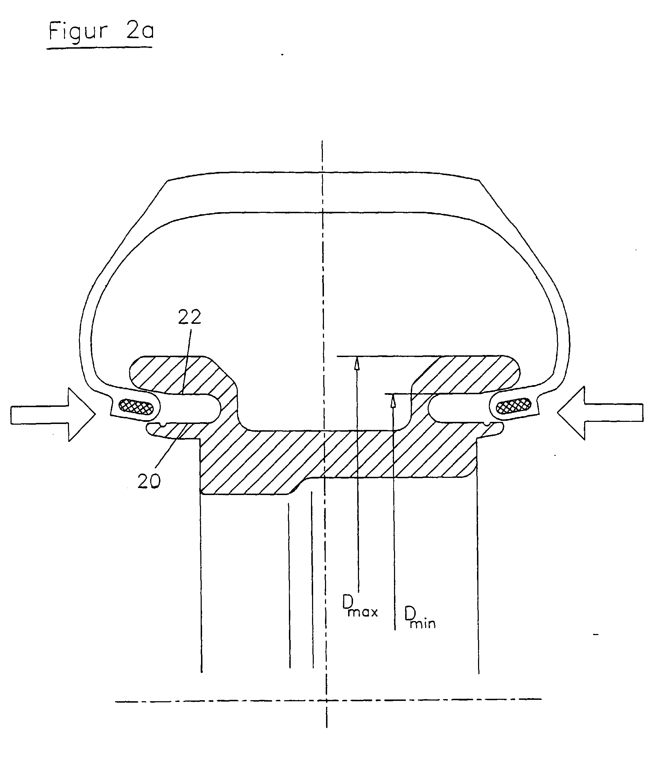

Anhand der schematischen Darstellungen der Figuren 2a bis 2e wird im Folgenden die Montage des Reifens auf einer Felge beschrieben. Die Notlaufstützflächen 14 weisen einen maximalen Außendurchmesser Dmax, die beiden Ringkammerwände 22 einen minimalen Innendurchmesser Dmin auf. Der Reifenwulst ist in Fig. 1 im ungedehnten Zustand. Sein Außendurchmesser Dwa entspricht dem Durchmesser der radial äußeren Ringkammerwand 22. Sein Innendurchmesser Dwi entspricht dem Durchmesser der radial inneren Ringkammerwand 20.

Zur Montage wird der Reifen 3 konzentrisch zur Felge zunächst an die Felge, beispielsweise von rechts, axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er wieder den ungedehnten und ungestauchten Zustand einnimmt. In diesem Zustand entspricht Dwi wieder dem Durchmesser der radial inneren Ringkammerwand 20 und Dwa wieder dem Durchmesser der radial äußeren Ringkammerwand22 in der Sitzposition in der Ringkammer. In diesem Zustand werden die Wülste, wie in Fig. 2a dargestellt ist, axial in die jeweilige Ringkammer eingeführt. Die Wülste sitzen dann ungedehnt und ungestaucht in der Ringkammer.

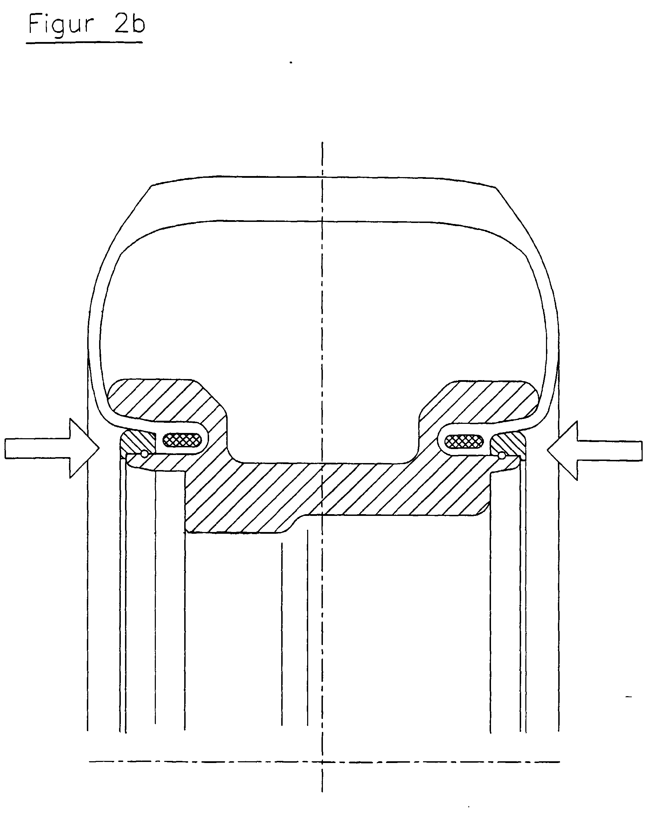

Dieser Zustand ist in Fig. 2b dargestellt. Wie in Fig. 2b dargestellt ist, wird nun jeweils ein Klemmring 12 von axial außen zwischen unterem Seitenwandbereich 16 des Reifens und der axialen Verlängerung der Ringkammerwand 20 axial soweit eingeführt, daß der Wulst vollständig von den Ringkammerwänden 20, 21, 22 und dem Klemmring 12 umschlossen ist. In dieser Position entspricht die axiale Postion der Umfangsnut 32 der axialen Position der Umfangsnut 31.

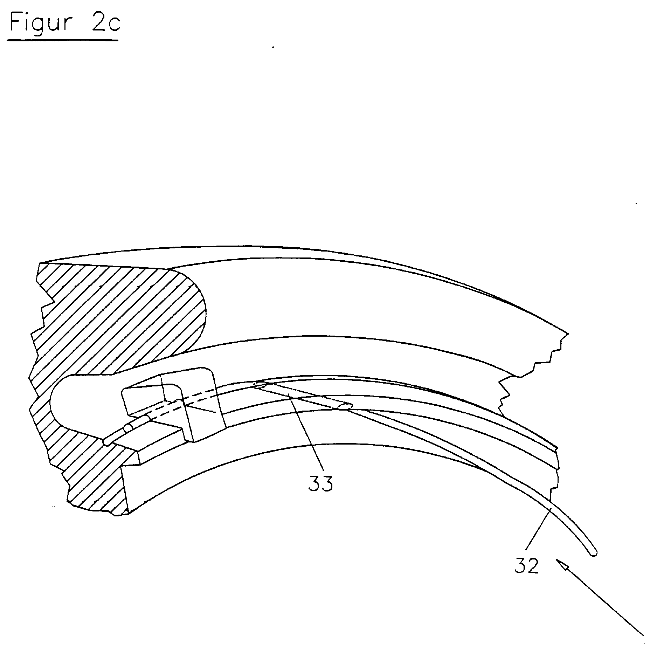

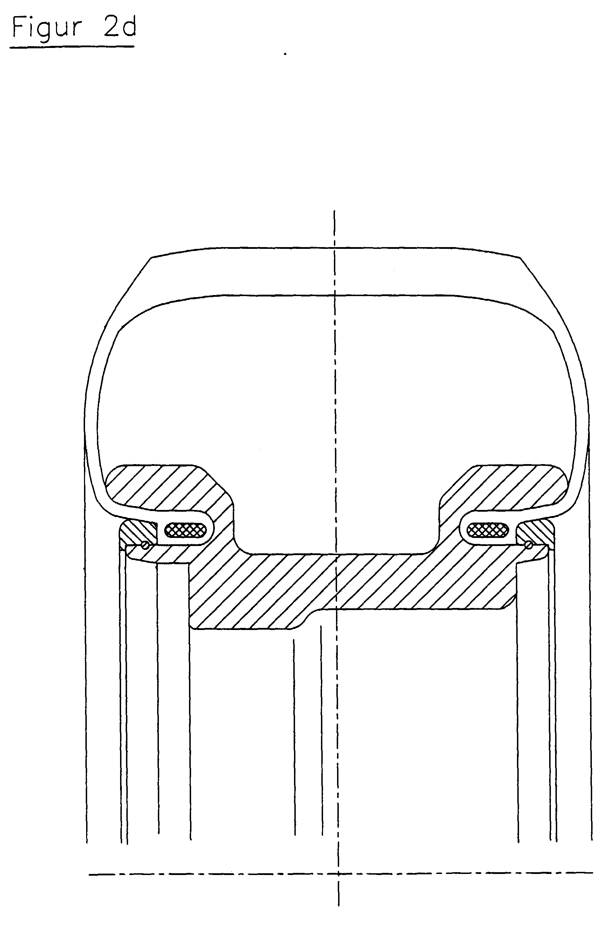

Wie in Fig. 2c dargestellt ist, wird durch eine Durchgangsbohrung 33, die von der radialen Innenseite der Felge von radial innen unter spitzem Winkel zur Umfangsrichtung in die Umfangsrille 31 mündet, der Draht 30 in den von Umfangsrille 31 und Umlangsrille 32 gebildeten Ringkanal so weit eingeführt, daß er sich über den gesamten Umfang des Ringkanals erstreckt. Der Formschluß zwischen Klemmring 12 und Felge ist, wie in Fig. 2d dargestellt ist, nun hergestellt.

Zur Demontage wird entsprechend zunächst der Draht 32 durch die Durchgangsöffnung 33 entfernt, der Klemmring 12 danach axial nach außen entfernt. Danach werden die Wülste axial aus der Ringkammer gezogen. Ein Wulst wird soweit gedehnt, daß er mit Spiel zu den Notlaufstützflächen axial von der Felge gezogen werden kann.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben. Soweit es die gewählten Notlaufstützflächen erlauben, ist es hier auch denkbar, den Kern nur flexibel und mit keiner oder geringer Dehnbarkeit auszubilden

Die Notlaufstützflächen können auch mit einem größeren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor1,1 bis 1,2 größer als der Innenringdurchmesser Dsi des Wulstkerns im montierten Zustand des Fahrzeugrades. Er kann in Spezialfällen jedoch auch um einen Faktor zwischen 1,05 und 1,3 größer sein als der Innenringdurchmesser Dsi des Wulstkerns im montierten Zustand des Fahrzeugrades. Als Gummimaterial des Wulstes wird hierfür jeweils ein Gummimaterial mit einer Dehnungsfähigkeit gewählt, die ein solches Dehnen des Wulstes in Umfangsrichtung erlauben, daß der Wulst über die Notlaufstützfläche 14 und in die Ringkammer axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % bei Standardreifen und in den Spezialfällen eine Dehnbarkeit zwischen 5 und 30 % aufweist.

Es ist auch denkbar nach Einführen des Wulstes in die Ringkammer einen Füllring durch Einpritzen von aushärtbarem Kunststoffmaterial von axial außen durch die Öffnung der Ringkammer einzubringen.

Es ist auch denkbar, einen Notlaufsattel auf der radial äußeren Mantelfläche auszubilden, dessen Notlaufstützfläche sich über den gesamten axialen Mittenbereich der Felge erstreckt. Diese kann beispielsweise über die gesamte axiale Gürtelbreite des Reifens ausgebildet sein.

Der Draht 32 kann beispielsweise einen runden Querschnitt mit einem Durchmesser von 1,8 mm aufweisen. Die Durchgangsbohrung 33 hat dann einen Durchmesser von beispielsweise 2 mm.

Die Umfangsnuten 31, 32 weisen einen halbkreisförmigen Querschnitt mit gleicher Tiefe auf, so daß der hierdurch gebildete Ringkanal in seinem Querschnitt, wie der Draht, ebenfalls kreisförmig ist.

Falls erforderlich, sind auch andere Querschnittsformen des Drahts und des Ringkanals möglich. Beispielsweise ist eine rechteckige oder quadratische Querschnittskontur möglich.

### Bezugszeichenliste

- 1: Felge
- 3: Fahrzeugluftreifen
- 6: Wulstbereich
- 7: Wulstartige Verdickung
- 8: Wulstkern
- 9: Seitenwand
- 10: Ringkammer
- 11: Notlaufsattel
- 12: Klemmring
- 14: Notlaufsatteloberfläche
- 16: unterer Seitenwandbereich
- 20: Ringkammerwand
- 21: Ringkammerwand
- 22: Ringkammerwand
- 24: Durchgangsöffnung
- 25: Axiale Verlängerung
- 26: Stirnfläche der Felge
- 30: Drahtring
- 31: Umfangsnut
- 32: Umfangsnut

## Patentansprüche

1. Rad/Reifensystem mit einer Felge mit Felgenhorn und mit einem mit Wulst ausgestatteten Reifen,
• bei dem das Felgenhorn zur Aufnahme des Wulstes einen mit einer ringförmigen Öffnung (Fuge) versehenen ringförmigen Hohlraum bildet,
• bei dem ein Klemmring zum - insbesondere axialen - Festklemmen des Wulstes gegen eine - insbesondere axiale - Stützfläche im Hohlraum aus einer Klemmposition zum Klemmen des Wulstes in eine Freigabeposition zum Lösen der Klemmung bzw aus seiner Freigabeposition in die Klemmposition axial bewegbar angeordnet ist, wobei der Klemmring mit einer Lagerfläche ausgebildet ist, mit der er in der Klemmposition auf einer zur Lagerfläche des Klemmrings korrespondierend ausgebildeten Lagerfläche der Felge verschiebbar gelagert ist, und
• bei dem die Felge und der Klemmring mit im Bereich ihrer Lagerflächen in ihrer Klemmposition zu einander korrespondierend ausgebildeten Umfangsnuten zur Aufnahme eines gemeinsamen Drahtes oder eines Kordes zwischen dem Klemmring und der Felge zur Erzeugung eines axialen Formschlusses zwischen Klemmring und Felge und somit zur axialen Fixierung des Klemmrings auf der Felge in dessen Klemmposition ausgebildet ist.

2. Rad/Reifensystem gemäß den Merkmalen von Anspruch 1,
wobei die Felge oder der Klemmring zum Einführen und/oder zum Ausführen des Drahtes bzw des Kordes in den durch die beiden Umfangsnuten zwischen Felge und Klemmring gebildeten Ringraum zur axialen Fixierung bzw zum Lösen der axialen Fixierung des Klemmrings mit einer Durchgangsöffnung ausgebildet ist, die sich von einer außerhalb der Lagerfläche ausgebildeten Fläche der Felge bzw des Klemmrings in die Umfangsnut der Felge bzw des Klemmrings erstreckt.

3. Rad/Reifensystem gemäß den Merkmalen von Anspruch 1 oder 2,
wobei der Wulst mit einem Gummikern - mit insbesondere rundem, eckigem oder ovalem Querschnitt - und - insbesondere mit einer Shore-A-Härte von 80 bis 95 - ausgebildet ist.

4. Rad/Reifensystem gemäß den Merkmalen von Anspruch 1 oder 2, wobei der Wulst kernlos ausgebildet ist.

5. Rad/Reifensystem gemäß den Merkmalen von einem oder mehreren der vorangegangenen Ansprüche,
wobei der Draht bzw der Kord mit einem kreisförmigen, einem quadratischen oder rechteckigen, abgerundeten oder nicht abgerundeten Querschnitt ausgebildet ist.

6. Rad/Reifensystem gemäß den Merkmalen von einem oder mehreren der vorangegangenen Ansprüche,
wobei sich der Draht oder der Kord im aufgebauten Betriebszustand des Fahrzeugrades über den gesamten Umfang der Felge erstreckt.

7. Verfahren zur Befestigung eines Reifens auf einer Felge,
wobei der Reifen zunächst mit seinem Wulst in eine zur Aufnahme des Wulstes ausgebildete ringförmigen Öffnung (Fuge) eines ringförmigen Hohlraums des Felgenhorns eingeführt und mit einem axial auf der Felge beweglichen Klemmring durch axiale Bewegung des Klemmrings auf eine Lagerfläche der Felge axial zwischen Klemmring und einer Stützfläche des ringförmigen Hohlraums festgeklemmt wird und wobei danach zur axialen Fixierung des Klemmrings in seiner Klemmposition ein Draht oder ein Kord in einen zweiten durch jeweils eine im Klemmring und in der Felge korrespondierend ausgebildete Umfangsnut gebildeten ringförmigen Hohlraum eingeführt wird, so daß ein axialer Formschluß zwischen Klemmring und Felge besteht.

8. Verfahren zur Befestigung eines Reifens auf einer Felge gemäß den Merkmalen von Anspruch 7,
wobei der Draht bzw der Kord zum Einführen und/oder zum Ausführen des Drahtes bzw des Kordes in den durch die beiden Umfangsnuten zwischen Felge und Klemmring gebildeten ringförmigen Hohlraum zur axialen Fixierung bzw zum Lösen der axialen Fixierung des Klemmrings durch eine Durchgangsöffnung bewegt wird, die sich von einer außerhalb der Lagerfläche ausgebildeten Fläche der Felge bzw des Klemmrings in die Umfangsnut der Felge bzw des Klemmrings erstreckt.

9. Verfahren zum Lösen eines Reifens von einer Felge,
wobei zunächst zur Lösung der axialen Fixierung eines zum Festklemmen des Wulstes axial auf der Felge fixierten Klemmrings ein Draht oder ein Kord aus einem durch jeweils eine im Klemmring und in der Felge korrespondierend ausgebildete Umfangsnut gebildeten ringförmigen Hohlraum zwischen Klemmring und Felge entfernt wird, so daß der axiale Formschluß zwischen Klemmring und Felge aufgehoben wird, wobei dann der axial auf der Felge bewegliche Klemmring durch axiale Bewegung auf seiner Lagerfläche auf der Felge soweit bewegt wird, daß der Wulst von der Felge entfernt werden kann, und
wobei der Reifen dann mit seinem Wulst entfernt wird.
